# EUROPÄISCHE PATENTSCHRIFT

(11) **EP 2 778 437 B1**
(45) Veröffentlichungstag und Bekanntmachung des Hinweises auf die Patenterteilung: **20.03.2019**
(21) Anmeldenummer: 14152223.5
(22) Anmeldetag: 23.01.2014
(51) Int. Cl.: F15B 13/044

(54) **Hydraulisches Ventil**
Hydraulic valve
Soupape hydraulique

(30) Priorität: 11.03.2013 DE 102013004108
(43) Veröffentlichungstag der Anmeldung: 17.09.2014
(73) Patentinhaber: CLAAS Industrietechnik GmbH, 33106 Paderborn (DE)
(72) Erfinder: Ebbes, Björn, 33106 Paderborn (DE)
(74) Vertreter: CLAAS Gruppe

(56) Entgegenhaltungen:
- DE-A1- 4 317 706
- DE-A1- 4 423 629
- DE-A1- 10 255 524
- GB-A- 2 486 182

## Beschreibung

Die vorliegende Erfindung betrifft ein Ventil zum Steuern des Flusses eines Hydraulikfluids, insbesondere zur Versorgung eines einfach oder doppelt wirkenden Verbrauchers.

Derartige Ventile sind in druckausgeglichener und in nicht druckausgeglichener Bauweise bekannt. Nicht druckausgeglichene Ventile erlauben es, die Druckdifferenz zwischen einem Hochdruck- und einem Niederdruckanschluss des Ventils zu nutzen, um einen Schließkörper gegen einen Ventilsitz zu pressen. Sie sind daher geeignet, um auch bei hohen Druckdifferenzen sicher zu dichten. Nachteilig ist jedoch, dass, um den Schließkörper vom Ventilsitz zu lösen, die auf den Schließkörper einwirkende hydrostatische Druckdifferenz überwunden werden muss. Die zum Öffnen des Ventils erforderliche Kraft nimmt daher mit der Druckdifferenz zu, und wenn ein solches Ventil durch einen Aktuator betätigt werden soll, muss der Aktuator kräftig genug sein, um auch die höchste Druckdifferenz zu überwinden, die an dem Ventil auftreten kann. Derartige Aktuatoren sind naturgemäß großformatig und kostspielig.

Ein Ventil in druckausgeglichener Bauweise ist z.B. von der Firma Bosch-Rexroth unter der Bezeichnung "WEDT-08" bekannt. Dieses herkömmliche Ventil hat eine im Wesentlichen zylindrische Hülse, bei der ein erster Anschluss an einer Stirnseite der Hülse und ein zweiter an ihrer Umfangsfläche gebildet ist. Ein in der Ventilhülse beweglicher Ventilstößel weist eine axiale Bohrung auf, über die der Druck des ersten Anschlusses an zwei voneinander abgewandten Stirnflächen des Stößels anliegt. Die auf den Stirnflächen des Stößels einwirkenden hydrostatischen Druckkräfte heben einander auf, so dass zum Schalten des Ventils nur eine geringe Stellkraft eines an der vom ersten Anschluss abgewandten Stirnfläche des Stößels angreifenden Aktuators erforderlich ist. Ein weiteres Beispiel ist in dem Dokument DE4317706A1 zu finden.

Die druckausgeglichene Bauweise verhindert jedoch nicht nur, dass ein hoher Druck am ersten Anschluss den Stößel am Sitz festhält, sondern auch, dass ein hoher Druck am zweiten Anschluss den Stößel vom Sitz löst. Wenn das Ventil in einem Hydrauliksystem eingesetzt werden soll, in dem der Druck am zweiten Anschluss den am ersten zeitweilig übersteigen und dadurch Komponenten des Systems gefährden kann, dann muss zur Verhinderung solcher Druckspitzen parallel ein Rückschlagventil verbaut werden, was Kosten und Platzbedarf einer Ventilbaugruppe für eine solche Anwendung deutlich erhöht. Solche Druckspitzen können z.B. an einer selbstfahrenden Erntemaschine auftreten, wenn eine von Hydraulikzylindern verstellbar gehaltene Baugruppe wie etwa ein Erntevorsatz während des Einsatzes externen Kräften ausgesetzt ist.

Aufgabe der Erfindung ist, ein einfach aufgebautes Ventil zu schaffen, das mit einer geringen Stellkraft die Steuerung eines starken Flusses erlaubt und gleichzeitig in der Lage ist, Überdrücke an einem seiner Anschlüsse abzufangen.

Die Aufgabe wird gelöst, indem bei einem Ventil mit einer Ventilhülse, die wenigstens einen ersten und einen zweiten Anschluss aufweist und einem in der Ventilhülse zwischen einer Schließstellung und wenigstens einer ersten Offenstellung beweglichen druckausgeglichenen Ventilstößel der Ventilstößel zwei gegeneinander bewegliche und durch einen am ersten Anschluss anstehenden hydrostatischen Druck gegeneinander beaufschlagte Teile umfasst, wobei das erste Teil des Ventilstößels ein Schließkörper ist, der in der Schließstellung an einem Ventilsitz dichtet, und das zweite Teil ein Übertragerstift ist, der in der ersten Offenstellung den Schließkörper vom Ventilsitz beanstandet hält, und wobei wenigstens ein erstes Federelement vorhanden ist, das den Schließkörper gegen den Ventilsitz beaufschlagt.

Solange der Druck am ersten Anschluss ausreichend höher als am zweiten Anschluss ist, sind die zwei Teile des Ventilstößels durch den am ersten Anschluss anliegenden Druck fest zusammengehalten und wie der Stößel des herkömmlichen Ventils gemeinsam zwischen der Schließstellung und der ersten Offenstellung bewegbar. Die Beweglichkeit eines Teils des Ventilstößels unabhängig vom anderen Teil ermöglicht eine zweite Offenstellung, in der die zwei Teile des Ventilstößels voneinander beabstandet sind und Fluid von zweiten zum ersten Anschluss strömen kann.

Um gezielt einen Übergang in die zweite Offenstellung zu erreichen, wenn ein hoher Druck am zweiten Anschluss anliegt, können die beiden Teile einander zweckmäßigerweise in einem mit dem zweiten Anschluss kommunizierenden Hohlraum berühren. So kann Fluid vom zweiten Anschluss leicht zwischen die beiden Teile eindringen und sie auseinander treiben.

Die beiden Teile sollten zweckmäßigerweise voneinander abgewandte und dem am ersten Anschluss anstehenden hydrostatischen Druck ausgesetzte Stirnflächen aufweisen. Die auf die Stirnflächen in entgegengesetzte Richtungen wirkenden Druckkräfte halten die beiden Teile in der Schließstellung und der ersten Offenstellung in Kontakt miteinander und gewährleisten, indem sie einander kompensieren, die leichte Beweglichkeit des Ventilstößels als Ganzes.

Das Ventil kann als 2/2-Wegeventil oder als 3/2-Wegeventil mit einem dritten Anschluss ausgebildet sein, der in der Schließstellung mit dem zweiten Anschluss fluidisch verbunden und in der ersten Offenstellung vom zweiten Anschluss getrennt ist. Ein solches 3/2-Wegeventil durchläuft beim Übergang zwischen der Schließstellung und der ersten Offenstellung einen Übergangsbereich, in dem entweder alle drei Anschlüsse miteinander verbunden oder alle drei Anschlüsse voneinander getrennt sind. Je nach beabsichtigter Verwendung des Ventils kann eine dieser beiden Varianten unbrauchbar sein, und im Allgemeinen ist es erwünscht, den Übergangsbereich möglichst kurz zu machen. Der zweiteilige Aufbau des Ventilstößels gemäß der Erfindung erlaubt durch den Austausch oder eine nachträgliche Konturänderung eines der beiden Teile des Ventilstößels, die Ausdehnung des Übergangsbereiches zu minimieren oder ein Ventil mit negativer Überdeckung, d.h. ein Ventil, bei dem im Übergangsbereich alle Anschlüsse verbunden sind, in ein Ventil mit positiver Überdeckung, d.h. mit im Übergangsbereich voneinander getrennten Anschlüssen umzubauen und umgekehrt.

Der Ventilstößel kann bei dem 3/2-Wegeventil in der ersten Offenstellung eine Spaltdichtung zwischen dem zweiten Anschluss und dem dritten Anschluss bilden. Die Spaltdichtung ermöglicht es dem Ventilstößel, sich aus der ersten Offenstellung ein Stück weit zu entfernen, ohne dass dadurch zwangsläufig sofort die Verbindung zwischen zweitem und drittem Anschluss hergestellt wird.

Eine in herkömmlicher Weise durch den Ventilstößel verlaufende Verbindung zwischen den zwei Stirnflächen wäre bei dem zweiteiligen Ventilstößel gemäß der Erfindung nur schwerlich gegen den zweiten Anschluss abzudichten. Daher ist eine druckausgleichende Fluidverbindung zwischen den zwei einander entgegengesetzten Stirnflächen des Stößels beim erfindungsgemäßen Ventil vorzugsweise durch einen getrennt vom Ventilstößel in der Ventilhülse verlaufenden Kanal gebildet.

Das erste Teil des Ventilstößels ist ein Schließkörper, der in der Schließstellung am Ventilsitz dichtet, und das zweite Teil ist ein Übertragerstift, der in der ersten Offenstellung den Schließkörper vom Ventilsitz beabstandet hält.

Die oben erwähnte Spaltdichtung ist dann vorzugsweise durch den Übertragerstift gebildet.

In der zweiten Offenstellung ist der Schließkörper vom Ventilsitz und vom Übertragerstift vorzugsweise in gleicher Richtung beabstandet. Schließkörper und Übertragerstift sind voneinander in axialer Richtung der Hülse durch einen mit Hydraulikfluid gefüllten Spalt getrennt.

Ein Aktuator kann zum Übertragen einer Stellkraft auf den Schließkörper am Übertragerstift angreifen.

Der Aktuator ist vorzugsweise proportional ansteuerbar, um nicht nur der ersten Offenstellung und der Schließstellung entsprechende Anschlagstellungen, sondern auch dazwischenliegende Stellungen stabil einzunehmen. Dadurch ist z.B. eine quantitative Steuerung des Durchsatzes des Ventils möglich, oder es kann das 3/2-Wegeventil zu einem 3/3-Wegeventil erweitert werden, indem eine Stellung des Ventilstößels zwischen der ersten Offenstellung und der Schließstellung einstellbar ist, in der die drei Anschlüsse entweder sämtlich voneinander getrennt oder sämtlich miteinander verbunden sind.

Da ein am ersten Anschluss anliegender Überdruck beim erfindungsgemäßen Ventil nicht wirksam ist, um den Schließkörper in Richtung der Schließstellung zu beaufschlagen, ist zu diesem Zweck wenigstens ein erstes Federelement vorgesehen.

Ein zweites Federelement kann am Übertragerstift angreifen, um diesen in Richtung der Schließstellung zu beaufschlagen. Infolge der Unterstützung durch das zweite Federelement verringert sich die Kraft, die das erste Federelement aufbringen muss, um den Schließkörper gegen den Ventilsitz drücken zu können. Das erste Federelement kann daher klein gehalten werden, so dass es den Fluss von Hydraulikfluid durch das Ventil in Offenstellung nicht nennenswert behindert.

Der Aktuator und die Ventilhülse können eine Kammer begrenzen, in die der druckausgleichende Kanal einmündet. Die Kammer kann insbesondere gebildet sein, indem die Ventilhülse in ein Gehäuse des Aktuators eingeschraubt ist.

Um eine schnelle und direkte Einwirkung eines Überdrucks am zweiten Anschluss auf den Schließkörper zu gewährleisten, ist es zweckmäßig, wenn der Schließkörper den Hohlraum in axialer Richtung der Ventilhülse begrenzt.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Schnitt durch eine Ventilbaugruppe mit zwei erfindungsgemäßen 3/2-Wegeventilen;
- Fig. 2: eine perspektivische Ansicht eines der Wegeventile aus Fig. 1;
- Fig. 3: einen axialen Schnitt durch das Wegeventil der Fig. 2;
- Fig. 4: einen axialen Schnitt durch ein 2/2-Wegeventil; und
- Fig. 5: einen Schließkörper gemäß einer weiterentwickelten Ausgestaltung des Ventils.

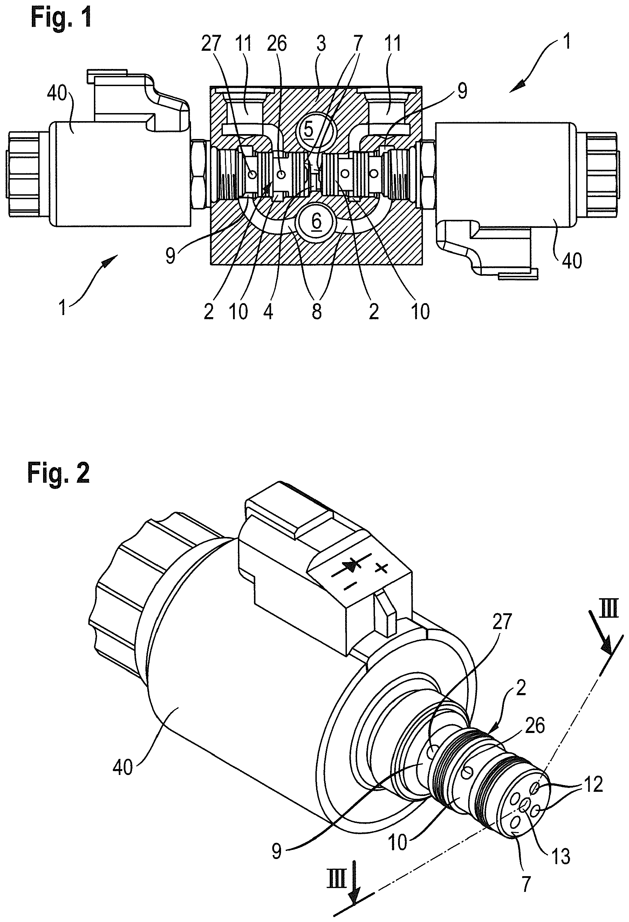

Fig. 1 zeigt zwei erfindungsgemäße Wegeventile 1 in einer typischen Anwendung. Die Wegeventile 1 umfassen jeweils eine Ventilpatrone oder Ventilhülse 2, die in eine sich in der Zeichnungsebene erstreckende Durchgangsbohrung 4 einer Ventilplatte 3 eingeschraubt ist, und einen Aktuator 40 außerhalb der Ventilplatte. Die Ventilplatte 3 weist in an sich bekannter Weise zwei senkrecht zur Zeichnungsebene orientierte Bohrungen 5, 6 auf, von denen die eine, 5, zwischen einander gegenüberliegenden Stirnseiten 7 der Ventilpatronen 2 auf die Durchgangsbohrung 4 mündet, um Hydraulikfluid unter hohem Druck von einer Pumpe an die Stirnseiten 7 der Ventile heranzuführen, während die andere, 6, über Zweigleitungen 8 mit sich um die Ventilpatronen 2 herum erstreckenden Ringräumen 9 verbunden ist, um von dort Hydraulikfluid unter niedrigem Druck zu einem Tank zurückzuleiten. Weitere die Ventilpatronen 2 umgebende Ringräume 10 stehen jeweils mit Verbraucheranschlüssen 11 der Ventilplatte 3 in Verbindung. Die Ringräume 9, 10 stellen somit zweite bzw. dritte Anschlüsse der Ventile dar.

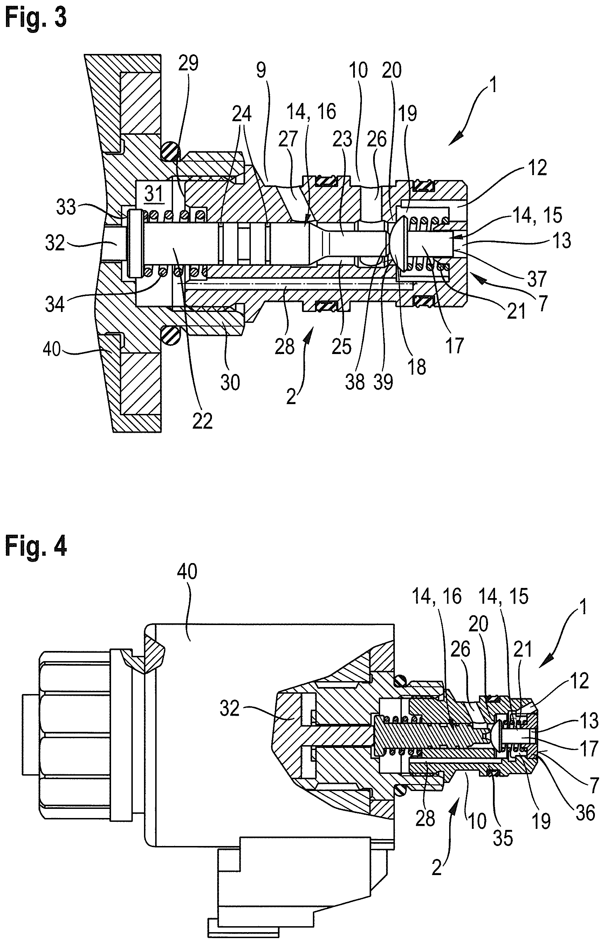

In der perspektivischen Ansicht der Fig. 2 sind an der Stirnseite 7 der Ventilhülse 2 ein zentraler Durchgang 13 und mehrere um diesen herum gruppierte Durchgänge 12 zu sehen. Die Durchgänge 12, 13 bilden einen dem hohen Druck der Pumpe ausgesetzten ersten Anschluss des Wegeventils 1. Wie in Fig. 2 durch gestrichelte Linien III-III angedeutet, verläuft der in Fig. 3 gezeigte axiale Schnitt durch das Wegeventil 1 in der oberen Hälfte der Fig. 3 durch einen der Durchgänge 12 und in der unteren Hälfte zwischen zwei Durchgängen 12.

Wie in Fig. 3 gezeigt, erstreckt der zentrale Durchgang 13 über die gesamte Länge der Ventilhülse 2 und enthält einen zweiteiligen Ventilstößel 14. Die zwei Teile des Ventilstößels 14 sind ein Schließkörper 15 und ein Übertragerstift 16. Der Schließkörper 15 umfasst einen zylindrischen Schaft 17 und eine Kugelkalotte 18. Der Schaft 17 ist in einem auf die Stirnseite 7 mündenden Eingangsabschnitt des Durchgangs 13 geführt. Der hohe Druck der Pumpe wirkt über den Durchgang 13 auf eine Stirnfläche 37 des Schafts 17. An den Eingangsabschnitt schließt eine Kammer 19 von größerem Durchmesser an, in die die Durchgänge 12 einmünden. Ein Ventilsitz 20 ist durch eine Verengung des Durchgangs 13 an der von der Stirnseite 7 abgewandten Seite der Kammer 19 gebildet. Die sphärische Oberfläche 39 der Kugelkalotte 18 ist durch eine in der Kammer 19 aufgenommene Schraubenfeder 21 dichtend gegen den Ventilsitz 20 gedrückt.

Der Übertragerstift 16 hat einen Kolbenabschnitt 22, der den Durchgang 13 eng toleriert ausfüllt und einen verjüngten Abschnitt 23, dessen Spitze 38 die sphärische Oberfläche 39 der Kugelkalotte 18 mittig berührt.

Ein Hohlraum 25 erstreckt sich rings um den verjüngten Abschnitt 23. Stichbohrungen 26, die den Hohlraum 25 mit dem Ringraum 10 verbinden, bilden einen zweiten Anschluss des Wegeventils 1. Zur Stirnseite 7 hin ist der Hohlraum 25 durch die Kugelkalotte 18 begrenzt. Ein dritter Anschluss ist durch Stichbohrungen 27 gebildet, die an der der Kugelkalotte 18 gegenüberliegenden Seite des Hohlraums 25 einmünden und ihn mit dem Ringraum 9 verbinden.

Parallel zum Durchgang 13 erstreckt sich ein Kanal 28 durch die Ventilhülse 2 von der Kammer 19 bis zu einer der Stirnseite 7 gegenüberliegenden Stirnseite 29. Diese begrenzt zusammen mit einem becherartigen Gehäuse 30 des Aktuators 40, in das die Ventilhülse 2 eingeschraubt ist, eine zweite Kammer 31, in der ein von einer außerhalb des Gehäuses 30 angeordneten Magnetspule angetriebener Magnetanker 32 an einer Stirnfläche 33 des Übertragerstifts 16 anliegt. Der Aktuator 40 kann für binären Betrieb ausgelegt sein, d.h. sein Magnetanker 32 hat lediglich zwei reproduzierbar einstellbare Anschlagpositionen an den Enden seines Verstellweges, die er in bestromtem bzw. unbestromtem Zustand der Magnetspule einnimmt; vorzugsweise erlaubt er Proportionalbetrieb, d.h. eine Versorgungsschaltung ist eingerichtet, die Magnetspule mit verschiedenen nichtverschwindenden Stromstärken zu beaufschlagen, denen jeweils reproduzierbar Positionen des Magnetankers 32 zwischen den Anschlagpositionen entsprechen.

Der Kanal 28 gewährleistet gleiche Drücke in den Kammern 19, 31, so dass der Magnetanker 32, um den Ventilstößel 14 zu verschieben, im Wesentlichen nur die Kraft der Feder 21 und, im hier gezeigten Fall, einer Feder 34 überwinden muss, die den Übertragerstift 16 gegen den Magnetanker 32 gedrückt hält. Ein übermäßig hoher Druck auf der Stirnseite 7 des Wegeventils 1, der z.B. auftreten kann, wenn ein über die Leitung 6 parallel zum Ventil 1 gespeister Verbraucher einer externen Kraft ausgesetzt ist, kann daher das Wegeventil 1 nicht blockieren.

Eine Nut 24 am Kolbenabschnitt 22 ist vorgesehen, um eine Gleitdichtung aufzunehmen, den Hohlraum 25 gegenüber der Kammer 31 abdichtet.

In der Stellung der Fig. 3 ist die Kammer 19 vom Hohlraum 25 getrennt, so dass kein Hydraulikfluid von der Bohrung 5 zur Bohrung 6 oder dem Verbraucheranschluss 11 fließen kann. Da die Stichbohrung 27 mit dem Hohlraum 25 in Verbindung steht, kann jedoch Hydraulikfluid vom Verbraucheranschluss 11 zur Bohrung 6 gelangen. Wenn der Übertragerstift 16 vom Magnetanker 32 in Richtung der Stirnseite 7 verschoben wird, löst er den Schließkörper 15 vom Ventilsitz 20, so dass Hydraulikfluid von der Bohrung 5 über die Kammer 19 in den Hohlraum 25 gelangen kann. Aus dem Hohlraum 25 kann das Fluid weiter zum Ringraum 10 und letztlich zum Verbraucheranschluss 11 gelangen, es kann aber auch über die Stichbohrungen 27 und den Ringraum 9 ungenutzt zur Bohrung 6 und letztlich dem Tank abfließen, solange nicht der Übertragerstift 16 weit genug vorgerückt ist, um die Stichbohrung 27 zu verschließen.

Fig. 4 zeigt eine alternative Ausgestaltung des Wegeventils 1 als 2/2-Wegeventil. Im Vergleich zu Fig. 3 sind die durch die Bewegung des Übertragerstifts 16 versperrbare Stichbohrung 27 und der dazugehörige Ringraum 9 an der Mantelfläche der Ventilhülse 2 weggefallen; bestehen geblieben sind die Stichbohrung 26 und der zugehörige Ringraum 10.

Ein weiterer Unterschied zwischen den Darstellungen der Fig. 3 und 4 ist der in Fig. 4 gezeigte zweiteilige Aufbau der Ventilhülse 2. Dieser zweiteilige Aufbau ist selbstverständlich auch auf das 3/2-Wegeventil der Fig. 3 übertragbar: ein Grundkörper 35 der Ventilhülse ist von der Stirnseite 7 aus bis zum Ventilsitz 20 mit großem Durchmesser ausgebohrt, um die Kammer 19 zu bilden. In die Bohrung ist ein Deckel 36 eingepresst, der die Schraubenfeder 21 abstützt und den Schaft 17 des Schließkörpers 15 führt.

In der Darstellung der Fig. 4 erstreckt sich der zentrale Durchgang 13 auch durch den Deckel 36. Abweichend von der Darstellung der Figur kann der Deckel 36 den Durchgang 13 auch komplett verschließen und stattdessen eine zur Kammer 19 hin offene Sackbohrung aufweisen, die den Schaft 17 des Schließkörpers 15 aufnimmt. Die Stirnfläche 37 des Schafts 17 ist dann nicht unmittelbar dem außen an der Stirnseite 7 anliegenden Druck ausgesetzt, sondern dem Druck der Kammer 19. Dies kann ein Schalten des Ventils 1 insbesondere dann erleichtern, wenn aufgrund hohen Durchsatzes der Druck in der Kammer 19 niedriger ist als an der Stirnseite 7.

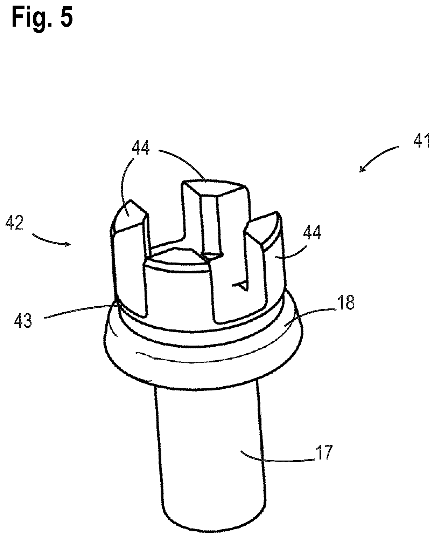

Fig. 5 zeigt eine perspektivische Ansicht eines alternativen Schließkörpers 41, der in den oben beschriebenen Wegeventilen 1 anstelle des Schließkörpers 15 verwendet werden kann, um Proportionalbetrieb zu erleichtern und/oder aus einem 3/2-Wegeventil mit negativer Überdeckung eines mit positiver Überdeckung zu machen.

Der Schließkörper 41 umfasst wie der Schließkörper 15 einen Schaft 17 und eine Kugelkalotte 18, zusätzlich aber auch einen auf die Kugelkalotte 18 aufgesetzten und in den Hohlraum 25 eingreifenden Adapter 42. Der Adapter 42 umfasst hier einen flach zylindrischen Abschnitt 43, dessen Außendurchmesser mit geringem Spiel dem Innendurchmesser des Hohlraums 25 entspricht und der, sobald der Schließkörper 41 sich vom Ventilsitz 20 löst, mit der Wand des Hohlraums 25 eine Spaltdichtung bildet, die den Durchsatz von Hydraulikfluid von der Kammer 19 zum Hohlraum 25 proportional zum Ausmaß der Auslenkung des Schließkörpers 41 begrenzt. Von dem zylindrischen Abschnitt 43 abstehende Finger 44 umgreifen und führen die Spitze des zwischen sie eingreifenden, in Fig. 5 nicht dargestellten Übertragerstifts 16.

### Bezugszeichen

- 1: Wegeventil
- 2: Ventilhülse
- 3: Ventilplatte
- 4: Durchgangsbohrung
- 5: Bohrung
- 6: Bohrung
- 7: Stirnseite
- 8: Zweigleitung
- 9: Ringraum
- 10: Ringraum
- 11: Verbraucheranschluss
- 12: Durchgang/erster Anschluss
- 13: Durchgang/erster Anschluss
- 14: Ventilstößel
- 15: Schließkörper
- 16: Übertragerstift
- 17: Schaft
- 18: Kugelkalotte
- 19: Kammer
- 20: Ventilsitz
- 21: Schraubenfeder
- 22: Kolbenabschnitt
- 23: verjüngter Abschnitt
- 24: Nut
- 25: Hohlraum
- 26: Stichbohrung/zweiter Anschluss
- 27: Stichbohrung/dritter Anschluss
- 28: Kanal
- 29: Stirnseite
- 30: Gehäuse
- 31: Kammer
- 32: Magnetanker
- 33: Stirnseite
- 34: Feder
- 35: Grundkörper
- 36: Deckel
- 37: Stirnfläche
- 38: Spitze
- 39: Oberfläche
- 40: Aktuator
- 41: Schließkörper
- 42: Adapter
- 43: zylindrischer Abschnitt
- 44: Finger

## Patentansprüche

1. Ventil mit einer Ventilhülse (2), die wenigstens einen ersten und einen zweiten Anschluss (12; 26) aufweist und einem in der Ventilhülse (2) zwischen einer Schließstellung und wenigstens einer ersten Offenstellung beweglichen druckausgeglichenen Ventilstößel (14), **dadurch gekennzeichnet, dass** der Ventilstößel (14) zwei gegeneinander bewegliche und durch einen am ersten Anschluss anstehenden hydrostatischen Druck gegeneinander beaufschlagte Teile (15, 16) umfasst, wobei das erste Teil des Ventilstößels (14) ein Schließkörper (15) ist, der in der Schließstellung an einem Ventilsitz (20) dichtet, und das zweite Teil ein Übertragerstift (16) ist, der in der ersten Offenstellung den Schließkörper (15) vom Ventilsitz (20) beabstandet hält, wobei wenigstens ein erstes Federelement (21)vorhanden ist, das den Schließkörper (15) gegen den Ventilsitz (21) beaufschlagt.

2. Ventil nach Anspruch 1, **dadurch gekennzeichnet, dass** die beiden Teile einander in einem mit dem zweiten Anschluss (26) kommunizierenden Hohlraum (25) berühren.

3. Ventil nach Anspruch 1 oder 2, **dadurch gekennzeichnet, dass** die beiden Teile (15, 16) voneinander abgewandte und dem am ersten Anschluss anstehenden hydrostatischen Druck ausgesetzte Stirnflächen (33, 37) aufweisen.

4. Ventil nach einem der vorhergehenden Ansprüche, **dadurch gekennzeichnet, dass** ein dritter Anschluss (27) in der Schließstellung mit dem zweiten Anschluss (26) fluidisch verbunden und in der ersten Offenstellung vom zweiten Anschluss (26) getrennt ist.

5. Ventil nach Anspruch 4, **dadurch gekennzeichnet, dass** der Ventilstößel in der ersten Offenstellung eine Spaltdichtung zwischen dem zweiten Anschluss (26) und dem dritten Anschluss (27) bildet.

6. Ventil nach einem der vorhergehenden Ansprüche, **dadurch gekennzeichnet, dass** der Druckausgleich am Ventilstößel (14) durch einen getrennt vom Ventilstößel (14) in der Ventilhülse (2) verlaufenden Kanal (28) bewirkt ist.

7. Ventil nach Anspruch 1, **dadurch gekennzeichnet, dass** in einer zweiten Offenstellung der Schließkörper vom Ventilsitz (20) und vom Übertragerstift (16) in gleicher Richtung beabstandet ist.

8. Ventil nach Anspruch 1 oder 7, **dadurch gekennzeichnet, dass** ein Aktuator (40) an dem Übertragerstift (16) angreift.

9. Ventil nach Anspruch 8, **dadurch gekennzeichnet, dass** der Aktuator (40) proportional ansteuerbar ist.

10. Ventil nach einem der Ansprüche 1 bis 9, **gekennzeichnet durch** ein zweites Federelement (34), das den Übertragerstift (16) in Richtung der Schließstellung beaufschlagt.

11. Ventil nach einem der Ansprüche 1 bis 10 und Anspruch 6, **dadurch gekennzeichnet, dass** der Aktuator (40) und die Ventilhülse (2) eine Kammer (31) begrenzen, in die der Kanal (28) einmündet.

12. Ventil nach einem der Ansprüche 1 bis 11, **dadurch gekennzeichnet, dass** der Schließkörper (15) den Hohlraum (25) in axialer Richtung der Ventilhülse (2) begrenzt.

## Claims

1. Valve with a valve sleeve (2) which has at least a first and a second connection (12; 26) and a pressure-balanced valve tappet (14) movable in the valve sleeve (2) between a closed position and at least a first open position, **characterized in that** the valve tappet (14) comprises two parts (15, 16) that are movable towards each other and impinged against each other by a hydrostatic pressure present at the first connection, wherein the first part of the valve tappet (14) is a closing body (15) which seals at a valve seat (20) in the closed position and the second part is a transfer pin (16) which holds the closing body (15) spaced apart from the valve seat (20) in the first open position, wherein at least a first spring element (21) is present, which impinges the closing body (15) against the valve seat (21).

2. Valve according to claim 1, **characterized in that** the two parts are in contact with each other in a cavity (25) communicating with the second connection (26).

3. Valve according to claim 1 or 2, **characterized in that** the two parts (15, 16) have end faces (33, 37) that face away from each other and are exposed to the hydrostatic pressure present at the first connection.

4. Valve according to one of the preceding claims, **characterized in that** a third connection (27) is in fluid connection with the second connection (26) in the closed position, and is separated from the second connection (26) in the first open position.

5. Valve according to claim 4, **characterized in that**, in the first open position, the valve tappet forms a gap seal between the second connection (26) and the third connection (27).

6. Valve according to one of the preceding claims, **characterized in that** the pressure balance at the valve tappet (14) is brought about by a channel (28), running in the valve sleeve (2), which is separate from the valve tappet (14).

7. Valve according to claim 1, **characterized in that**, in a second open position, the closing body is spaced apart from the valve seat (20) and from the transfer pin (16) in the same direction.

8. Valve according to claim 1 or 7, **characterized in that** an actuator (40) engages on the transfer pin (16).

9. Valve according to claim 8, **characterized in that** the actuator (40) is proportionally controllable.

10. Valve according to one of claims 1 to 9, **characterized by** a second spring element (34) which impinges the transfer pin (16) in the direction of the closed position.

11. Valve according to one of claims 1 to 10, **characterized in that** the actuator (40) and the valve sleeve (2) delimit a chamber (31) into which the channel (28) opens.

12. Valve according to one of claims 1 to 11, **characterized in that** the closing body (15) delimits the cavity (25) in the axial direction of the valve sleeve (2).

## Revendications

1. Valve comprenant un manchon de valve (2), qui comporte au moins un premier et un deuxième raccord (12 ; 26), et comprenant un poussoir de valve compensé en pression (14) déplaçable dans le manchon de valve (2) entre une position fermée et au moins une première position ouverte, **caractérisée en ce que** le poussoir de valve (14) comprend deux pièces (15, 16) mobiles l'une par rapport à l'autre et sollicitées l'une vers l'autre par l'intermédiaire d'une pression hydrostatique disponible au niveau du premier raccord, la première pièce du poussoir de valve (14) étant un corps de fermeture (15) qui, en position fermée, crée l'étanchéité au niveau d'un siège de valve (20), et la seconde pièce étant une broche de transmission (16) qui, dans la première position ouverte, maintient le corps de fermeture (15) à distance du siège de valve (20), au moins un premier élément élastique (21) étant prévu, lequel sollicite le corps de fermeture (15) contre le siège de valve (21).

2. Valve selon la revendication 1, **caractérisée en ce que** les deux pièces se touchent entre elles dans une cavité (25) communiquant avec le deuxième raccord (26).

3. Valve selon la revendication 1 ou 2, **caractérisée en ce que** les deux pièces (15, 16) comportent des faces frontales (33, 37) opposées l'une à l'autre et exposées à la pression hydrostatique disponible au niveau du premier raccord.

4. Valve selon une des revendications précédentes, **caractérisée en ce qu'**un troisième raccord (27) est en liaison fluidique avec le deuxième raccord (26) dans la position fermée et est isolé du deuxième raccord (26) dans la première position ouverte.

5. Valve selon la revendication 4, **caractérisée en ce que**, dans la première position ouverte, le poussoir de valve forme un joint fendu entre le deuxième raccord (26) et le troisième raccord (27) .

6. Valve selon une des revendications précédentes, **caractérisée en ce que** la compensation de pression au niveau du poussoir de valve (14) est réalisée par l'intermédiaire d'un canal (28) qui s'étend dans le manchon de valve (2) à l'écart du poussoir de valve (14).

7. Valve selon la revendication 1, **caractérisée en ce que**, dans une seconde position ouverte, le corps de fermeture est distant du siège de valve (20) et de la broche de transmission (16) dans la même direction.

8. Valve selon la revendication 1 ou 7, **caractérisée en ce qu'**un actionneur (40) agit sur la broche de transmission (16).

9. Valve selon la revendication 8, **caractérisée en ce que** l'actionneur (40) est commandable de façon proportionnelle.

10. Valve selon une des revendications 1 à 9, **caractérisée par** un second élément élastique (34) qui sollicite la broche de transmission (16) en direction de la position fermée.

11. Valve selon une des revendications 1 à 10, **caractérisée en ce que** l'actionneur (40) et le manchon de valve (2) délimitent une chambre (31) dans laquelle débouche le canal (28).

12. Valve selon une des revendications 1 à 11, **caractérisée en ce que** le corps de fermeture (15) délimite la cavité (25) dans la direction axiale du manchon de valve (2).
